# EUROPEAN PATENT APPLICATION

(11) **EP 3 316 107 A1**
(43) Date of publication of application: **02.05.2018**
(21) Application number: 17193679.2
(22) Date of filing: 28.09.2017
(51) Int. Cl.: G06F 3/0481, G06F 3/0486, G06F 3/0488, G06F 21/12, G06F 21/62, G06F 21/36

(54) **METHOD AND DEVICE FOR HIDING APPLICATION ICON**

(30) Priority: 01.11.2016 WO PCT/CN2016/104213
(71) Applicant: Beijing Xiaomi Mobile Software Co., Ltd., Beijing 100085 (CN)
(72) Inventor: LIANG, Zhe, Beijing, Beijing 100085 (CN); ZHU, Yin, Beijing, Beijing 100085 (CN); YANG, Piao, Beijing, Beijing 100085 (CN)
(74) Representative: Kudlek, Franz Thomas

(57) **Abstract**

The disclosure relates to a method and device for hiding an Application (APP) icon, and belongs to the field of computer technology. The method includes monitoring, in a desktop interface, a hiding operation on a first APP icon by a second APP icon being any installed APP icon (101); and hiding the first APP icon in the desktop interface (102). In the disclosure, the problem of poorer privacy of an APP icon hiding function provided by the related technology is solved; and since another APP icon for hiding the APP icon may be arbitrarily selected by a user, others cannot easily trigger the hidden APP icon to be displayed due to not knowing a specific hiding position of the hidden APP icon, even though they master the operation for triggering the hidden APP icon to be displayed, and the privacy of the function is improved.

## Description

### TECHNICAL FIELD

The present disclosure generally relates to the field of computer technology, and more particularly to a method and device for hiding an Application (APP) icon.

### BACKGROUND

At present, various types of APPs may be installed in a terminal device such as a mobile phone and a tablet computer to expand functions of the terminal device. APP icons of various installed APPs are displayed in a desktop interface of the terminal device, and click on an APP icon by a user may trigger the terminal device to run the corresponding APP.

### SUMMARY

Accordingly, the present invention provides a method and device for hiding an APP icon, in accordance with claims which follow.

According to a first aspect, the invention relates to a method for hiding an Application (APP) icon, comprising: monitoring, in a desktop interface, a hiding operation on a first APP icon by a second APP icon, the second APP icon being any installed APP icon; and hiding the first APP icon in the desktop interface.

In the first aspect, in the case that the hiding operation on the first APP icon by the second APP icon is detected in the desktop interface, the first APP icon is hidden in the desktop interface, so that the problem of relatively poorer privacy of an APP icon hiding function provided by the related technology is solved; and since the other APP icon used for hiding the APP icon may be arbitrarily selected by the user, others cannot easily trigger the hidden APP icon to be displayed due to not knowing a specific hiding position of the hidden APP icon, even though they master the operation for triggering the hidden APP icon to be displayed, and the privacy of the function is improved.

According to an exemplary embodiment, the hiding operation comprises: dragging the first APP icon to the second APP icon; and then releasing the first APP icon.

According to a particular embodiment, the hiding operation comprises:
long-pressing the first APP icon; dragging the first APP icon to the second APP icon; and then releasing the first APP icon.

According to a particular embodiment, the method further comprises: displaying multiple options after the dragging the first APP icon to the second APP icon and then releasing the first APP icon, the multiple options comprising a hiding option, and the hiding option being arranged to trigger selection of hiding the first APP icon under the second APP icon; and acquiring a selection operation of the hiding option to trigger execution of the hiding the first APP icon in the desktop interface.

According to a particular embodiment, the method further comprises: monitoring, in the desktop interface, a hidden APP calling operation corresponding to the second APP icon; and after monitoring the hidden APP calling operation, running an APP corresponding to the APP icon hidden by the second APP icon.

According to a particular embodiment, monitoring, in the desktop interface, the hidden APP calling operation corresponding to the second APP icon comprises: monitoring, in the desktop interface, a multi-click operation on the second APP icon; or monitoring, in the desktop interface, a press operation on the second APP icon; or monitoring, in the desktop interface, a swipe operation on the second APP icon.

According to a particular embodiment, running the APP corresponding to the APP icon hidden by the second APP icon comprises: when there is one APP icon hidden by the second APP icon, running an APP corresponding to the APP icon hidden by the second APP icon; or when there are a plurality of APP icons hidden by the second APP icon, displaying a hidden APP interface in which the APP icons hidden by the second APP icon are included, acquiring an operation of selecting a target APP icon in the hidden APP interface, and running an APP corresponding to the target APP icon.

According to a particular embodiment, the method further includes: receiving a request for viewing the hidden APP, and acquiring a verification password; confirming the received verification password; and in a case where the verification password is correct, displaying the hidden APP, the hidden APP being displayed in a manner of associating the first APP icon with the second APP icon.

According to a particular embodiment, the method further includes acquiring, from an APP store, an operation instruction for an APP, the APP being corresponding to the first APP icon; and displaying the APP corresponding to the first APP icon, and marking a state of the APP corresponding to the first APP icon to be hidden.

According to a second aspect, the invention relates to a device for hiding an APP icon comprising: a first monitoring module configured to monitor, in the desktop interface, a hiding operation on a first APP icon by a second APP icon, the second APP icon being any installed APP icon; and a hiding module configured to hide the first APP icon in the desktop interface.

The advantages and technical effects of the device according to the invention correspond to those of the method presented above.

According to a particular embodiment, the hiding operation comprises: dragging the first APP icon to the second APP icon and then releasing the first APP icon.

According to a particular embodiment, the hiding operation comprises: long-pressing the first APP icon, dragging the first APP icon to the second APP icon and then releasing the first APP icon.

According to a particular embodiment, the device further comprises: a first display module configured to display multiple options after dragging the first APP icon to the second APP icon and then releasing the first APP icon, the multiple options comprising a hiding option, and the hiding option being arranged to trigger selection of the hiding the first APP icon under the second APP icon; and a first acquisition module configured to acquire a selection operation of the hiding option to trigger execution of the hiding the first APP icon in the desktop interface by the hiding module.

According to a particular embodiment, the device further comprises: a second monitoring module configured to monitor, in the desktop interface, a hidden APP calling operation corresponding to the second APP icon; and a running module configured to, after monitoring the hidden APP calling operation, run an APP corresponding to the APP icon hidden by the second APP icon.

According to a particular embodiment, the second monitoring module is configured to: monitor, in the desktop interface, a multi-click operation on the second APP icon; or monitor, in the desktop interface, a press operation on the second APP icon; or monitor, in the desktop interface, a swipe operation on the second APP icon.

According to a particular embodiment, the running module is configured to: when there is one APP icon hidden by the second APP icon, run an APP corresponding to the APP icon hidden by the second APP icon; or when there are a plurality of APP icons hidden by the second APP icon, display a hidden APP interface in which the APP icons hidden by the second APP icon are included, acquire an operation of selecting a target APP icon in the hidden APP interface, and run an APP corresponding to the target APP icon.

According to a particular embodiment, the device further comprises: a second acquisition module configured to receive a request for viewing the hidden APP, and acquire a verification password; a confirmation module configured to confirm the received verification password; and a second display module configured to, in a case where the verification password is correct, display the hidden APP, the hidden APP being displayed in a manner of associating the first APP icon with the second APP icon.

According to a particular embodiment, the device further comprises: a third acquisition module configured to acquire, from an APP store, an operation instruction for an APP, the APP being corresponding to the first APP icon; and a third display module configured to display the APP corresponding to the first APP icon, and mark a state of the APP corresponding to the first APP icon to be hidden.

According to a third aspect, the invention relates to a device for hiding an APP icon, comprising: a processor; and a memory configured to store an executable instruction of the processor, wherein the processor is configured to: monitor, in the desktop interface, a hiding operation on a first APP icon by a second APP icon, the second APP icon being any installed APP icon; and hide the first APP icon in the desktop interface.

The advantages and technical effects of the device according to the invention correspond to those of the method presented above.

In one particular embodiment, the steps of the method for hiding an APP icon are determined by computer program instructions.

Consequently, according to a fourth aspect, the invention is also directed to a computer program for executing the steps of a method for hiding an APP icon as described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

It is to be understood that both the foregoing general description and the following detailed description are exemplary and explanatory only and are not restrictive of the present disclosure.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.
Fig. 1 is a flow chart showing a method for hiding an APP icon, according to an exemplary embodiment.
Fig. 2 is a schematic diagram illustrating an exemplary interface.
Fig. 3 is a flow chart showing a method for hiding an APP icon, according to another exemplary embodiment.
Fig. 4 is a flow chart showing a method for hiding an APP icon, according to another exemplary embodiment.
Fig. 5 is a flow chart showing a method for hiding an APP icon, according to another exemplary embodiment.
Fig. 6 is a block diagram of a device for hiding an APP icon, according to an exemplary embodiment.
Fig. 7 is a block diagram of a device for hiding an APP icon, according to another exemplary embodiment.
Fig. 8 is a block diagram of a device, according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present disclosure. Instead, they are merely examples of apparatuses and methods consistent with aspects related to the present disclosure as recited in the appended claims.

There is a need for a user to hide an APP icon in a desktop interface. For example, the user does not want others to view a certain APP installed in a terminal device, or the user does not want others to trigger a certain APP installed in the terminal device to run. In a related technology, the user may trigger a hidden APP interface to be displayed through a specific operation (such as a triple-click operation performed in the desktop interface) preset in the terminal device, and the hidden APP interface is arranged to place an APP icon needed to be hidden by the user. The hidden APP interface may only be triggered to be displayed by the above-mentioned specific operation. The user may add an APP icon into the hidden APP interface or click an APP icon in the hidden APP interface to trigger a corresponding APP to run.

The hidden APP icon is managed by the hidden APP interface in a unified manner, and the specific operation used for triggering the hidden APP interface to be displayed is preset in the terminal device. For example, the same specific operation is usually preset in terminal devices from the same manufacturer or of the same model number, so that others may view the APP icon hidden by the user in the hidden APP interface only by knowing the specific operation, and privacy of such a function is poorer. On such a basis, an embodiment of the present disclosure provides a method for hiding an APP icon and a device based on the method, so as to solve the problem existing in the related technology. According to the technical solutions provided by the embodiments of the present disclosure, a core concept is that the APP icon needed to be hidden by the user is hidden at any position in the desktop interface. For example, another APP icon in the desktop interface except the APP icon needed to be hidden by the user is arranged to hide the above-described APP icon needed to be hidden. Since the other APP icon used for hiding the APP icon may be arbitrarily selected by the user, others cannot easily trigger the hidden APP icon to be displayed due to not knowing a specific hiding position of the hidden APP icon, even though they master the operation for triggering the hidden APP icon to be displayed, and the privacy of the function is improved.

According to the method provided by the embodiments of the present disclosure, an execution subject of each step may be a terminal device, such as a mobile phone, a tablet computer, an electronic book reader, a multimedia player, a Personal Digital Assistant (PDA), a wearable device and the like.

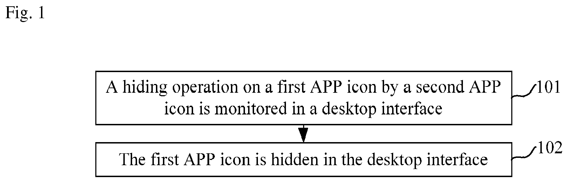

Fig. 1 is a flow chart showing a method for hiding an APP icon, according to an exemplary embodiment. The method may include the following steps.

In Step 101, a hiding operation on a first APP icon by a second APP icon is monitored in a desktop interface.

The desktop interface is a primary interface displayed on the terminal device, and the desktop interface includes a plurality of APP icons. The APP icons are icons located in the desktop interface for running APPs, the APP icons are arranged to uniquely identify the APPs, and click on the APP icon may trigger the APP corresponding to the APP icon to run. The first APP icon is an APP icon, which is needed to be hidden, selected by a user, and the second APP icon is an APP icon selected to hide the first APP icon by the user. Optionally, the first APP icon and the second APP icon are both APP icons in the desktop interface, so that hiding and calling of the APP icons may be implemented in the desktop interface, and more convenience and higher efficiency for operation are ensured.

Optionally, the second APP icon is any installed APP icon. For example, the second APP icon is any APP icon except the first APP icons in the desktop interface. That is, any APP icon except the first APP icon in the desktop interface may be selected by the user to hide the first APP icon. In such a manner, others cannot easily trigger the hidden APP icon to be displayed due to not knowing a specific hiding position of the hidden APP icon, even though they master the operation for triggering the hidden APP icon to be displayed, and the privacy of the function is improved.

The hiding operation is an operation arranged to trigger the terminal device to hide the first APP icon.

In a possible implementation mode, the hiding operation includes dragging the first APP icon to the second APP icon and then releasing the first APP icon. For example, the user executes a swipe operation started from the first APP icon and ended at the second APP icon. Correspondingly, after detecting the swipe operation, the terminal device moves the first APP icon along a trajectory of the swipe operation.

In another possible implementation mode, the hiding operation includes long-pressing the first APP icon, dragging the first APP icon to the second APP icon and then releasing the first APP icon. For example, the user long-presses and drags the first APP icon to execute the swipe operation started from the first APP icon and ended at the second APP icon. Correspondingly, the terminal device moves the first APP icon along the trajectory of the swipe operation.

In the above manner, the user may intuitively and definitely see the APP icon which is needed to be hidden. In addition, in the above manner, the first APP icon may be hidden by the second APP icon only through one dragging operation, so that simplicity and high efficiency for operation are ensured.

In another possible implementation mode, the hiding operation includes: a first selection operation corresponding to the first APP icon and a second selection operation corresponding to the second APP icon. The first selection operation is any one of a click operation, a long-press operation, a press operation and a swipe operation; and the second selection operation is any one of a click operation, a long-press operation, a press operation and a swipe operation.

The click operation is also called a tapping operation. Considering that a single-click operation on an APP icon is usually arranged to trigger an APP corresponding to the APP icon to run, the first selection operation may be a multi-click operation, such as a double-click or triple-click operation. The long-press operation refers to an operation for which a press time length is larger than a preset time length. The press operation refers to an operation of which pressure is higher than preset pressure. In an example, if the first selection operation is a long-press operation and the second selection operation is a click operation, after acquiring the long-press operation on a certain APP icon, the terminal device determines that the APP icon is the first APP icon (i.e. the APP icon which is needed to be hidden); and then, after acquiring the click operation on another APP icon, the terminal device determines that the other APP icon is the second APP icon (i.e. an APP icon arranged to hide the APP icon which is needed to be hidden).

In the implementation mode, the first APP icon is hidden by the second APP icon through the two selection operations.

In addition, in the abovementioned example, the condition that the first APP icon (i.e. the APP icon which is needed to be hidden) is first selected and the second APP icon (i.e. the APP icon arranged to hide the APP icon which is needed to be hidden) is then selected is taken as an example only, in another possible implementation mode, the second APP icon (i.e. the APP icon arranged to hide the APP icon which is needed to be hidden) may also be first selected and the first APP icon (i.e. the APP icon which is needed to be hidden) is then selected, but the embodiments of the present disclosure are not limited thereto.

In Step 102, the first APP icon is hidden in the desktop interface.

In an example, the terminal device deletes the first APP icon in the desktop interface.

In another example, the terminal device displays the first APP icon in an invisible form in the desktop interface. For example, transparency of the first APP icon is regulated into complete transparency, or an appearance of the first APP icon is regulated to be the same as the desktop interface, so that an effect of hiding the first APP icon in the desktop interface is achieved.

It is needed to supplement that any APP icon in the desktop interface may be arranged to hide another APP icon and may also be arranged to hide more other APP icons.

In addition, the terminal device is also needed to store an association relationship between the first APP icon and the second APP icon for subsequent calling of the hidden APP icon according to the association relationship. After a display position of the second APP icon in the desktop interface is changed, the APP icon hidden to the second APP icon does not change, and the user may view and run an APP corresponding to the APP icon hidden to the second APP icon by executing a hidden APP calling operation corresponding to the second APP icon.

From the above, the method provided by the embodiment hides the first APP icon in the desktop interface when the hiding operation on the first APP icon by the second APP icon is detected in the desktop interface, so that the problem of relatively poorer privacy of an APP icon hiding function provided by the related technology is solved; and since another APP icon used for hiding the APP icon may be arbitrarily selected by the user, others cannot easily trigger the hidden APP icon to be displayed due to not knowing a specific hiding position of the hidden APP icon, even though they master the operation for triggering the hidden APP icon to be displayed, and the privacy of the function is improved.

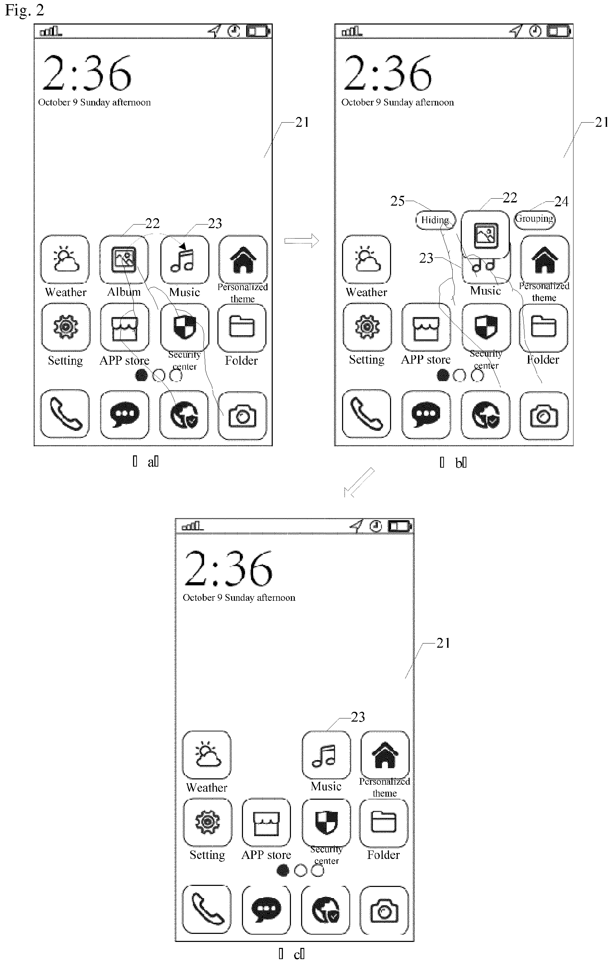

In an optional embodiment provided on the basis of the embodiment shown in Fig. 1, the method for hiding the APP icon further includes the following steps.
1: After the first APP icon is dragged to the second APP icon and then the first APP icon is released, multiple options are displayed.
   The multiple options include a hiding option, and the hiding option is arranged to trigger selection of hiding the first APP icon under the second APP icon. In an example, the multiple options include a grouping option and a hiding option. The grouping option is arranged to trigger selection of putting the first APP icon and the second APP icon in the same folder.
   In addition, for different operation manners for hiding the first APP icon, the terminal device displays the multiple options at different times.
   When the hiding operation is the dragging operation introduced in Step 101, the terminal device may display the multiple options when detecting that the dragging operation is ended; and the terminal device may also display the multiple options when detecting that an area of an overlapped part of the first APP icon and the second APP icon is larger than a preset area. Referring to Fig. 2, the user executes a swipe operation started from an "album" APP icon 22 in the desktop interface 21 and ended at a "music" APP icon 23 to trigger the "album" APP icon 22 to be hidden to the "music" APP icon 23, and the terminal device displays a grouping option 24 and a hiding option 25 after acquiring the swipe operation.
   When the hiding operation is the two selection operations introduced in Step 101, the terminal device may display the multiple options when acquiring the first selection operation, and may also display the multiple options when acquiring the second selection operation.
2: A selection operation of the hiding option is acquired to trigger execution of the step that the first APP icon is hidden in the desktop interface.

Optionally, the selection operation of the hiding option is a click operation. For example, referring to Fig. 2, after the user clicks the hiding option 25, the terminal device hides the "album" APP icon 22 in the desktop interface 21, and the desktop interface 21 after hiding is shown by a part (c) in Fig. 2.

In the above manner, a hiding function is expanded on the basis of some original management functions in the APP icons.

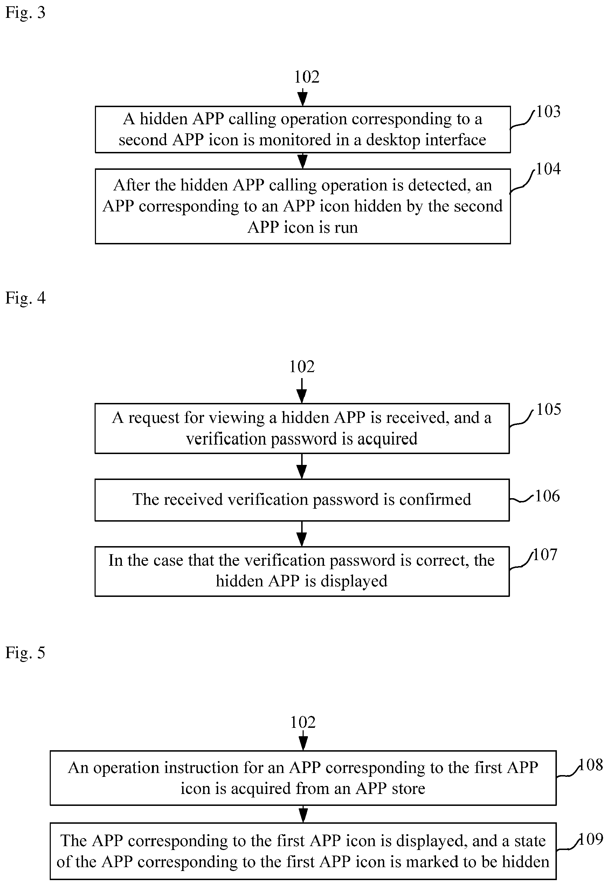

In another optional embodiment provided on the basis of the embodiment shown in Fig. 1, as shown in Fig. 3, after Step 102, the method further includes the following steps.

In Step 103, a hidden APP calling operation corresponding to the second APP icon is monitored in the desktop interface.

The hidden APP calling operation is used to trigger an APP corresponding to the APP icon hidden by the second APP icon to run. The step includes the following possible implementation modes:
1: a multi-click operation on the second APP icon is monitored in the desktop interface;
2: a press operation on the second APP icon is monitored in the desktop interface; and
3: a swipe operation on the second APP icon is monitored in the desktop interface.

In Step 104, after the hidden APP calling operation is detected, an APP corresponding to the APP icon hidden by the second APP icon is run.

If there is one APP icon hidden by the second APP icon, an APP corresponding to the APP icon hidden by the second APP icon is run. In an example, after the hidden APP calling operation is acquired, the terminal device directly runs the APP corresponding to the APP icon hidden by the second APP icon. In another example, after the hidden APP calling operation is acquired, the terminal device displays the APP icon hidden by the second APP icon, and when a display time length reaches a preset time length (such as 2 seconds) or an opening operation corresponding to the hidden APP icon is acquired, the terminal device runs the APP corresponding to the hidden APP icon. In addition, the terminal device may display the hidden APP icon by the second APP icon beside the second APP icon, and the terminal device may also overturn and display the second APP icon as the hidden APP icon.

If there are a plurality of APP icons hidden by the second APP icon, a hidden APP interface is displayed, the hidden APP interface including the APP icons hidden by the second APP icon; an operation of selecting a target APP icon in the hidden APP interface is acquired; and an APP corresponding to the target APP icon is run. The hidden APP interface may be displayed in an upper layer of the desktop interface in an overlapping manner. In addition, an arrangement sequence of each APP icon in the hidden APP interface may be determined according to a preset sequencing rule. The preset sequencing rule may be a sequence according to which the terminal device hides each APP icon, and may also be times/frequencies for which the terminal device runs APPs corresponding to each APP icon, etc. The preset sequencing rule may be set by the terminal device as a default, and may also be set by the user in a customizable manner. In addition, the user may also adjust the arrangement sequence of the APP icons in the hidden APP interface in a customizable manner.

In the above manner, the APPs corresponding to the hidden APP icons may be rapidly run without a complex operation or input of a verification password, and both privacy and convenience are ensured.

In another optional embodiment provided on the basis of the embodiment shown in Fig. 1, as shown in Fig. 4, after Step 102, the method further includes the following steps.

In Step 105, a request for viewing the hidden APP is received, and a verification password is acquired.

The hidden APP is an APP corresponding to the hidden APP icon. The request for viewing is arranged to request the terminal device to display the hidden APP for the user to view. The verification password is arranged to check an identity of the user, and the verification password may be an unlocking password of the terminal device, and may also be a preset password dedicated to view the hidden APP.

In addition, in the embodiment of the present disclosure, an implementation form for the verification password is not limited. For example, the verification password may be a numeric password, a graphical password, a gesture password, a fingerprint and the like.

In Step 106, the received verification password is confirmed.

The terminal device acquires the verification password input by the user, and compares the input verification password with a pre-stored verification password to confirm whether the received verification password is correct or not.

In Step 107, in a case where the verification password is correct, the hidden APP is displayed.

The hidden APP is displayed in a manner of associating the first APP icon with the second APP icon. The first APP icon refers to an APP icon hidden under the second APP icon, and there may be one first APP icon, and may also be a plurality of first APP icons; and the second APP icon is an APP icon arranged to hide the first APP icon. The terminal device stores an association relationship between the first APP icon and the second APP icon after hiding the first APP icon in the desktop interface under the second APP icon. Optionally, the terminal device stores a corresponding relationship between an APP identifier of the first APP icon and an APP identifier of the second APP icon, and marks the hidden APP icon and/or the APP icon arranged to hide the APP icon. The APP identifiers of the APP icons may be names of the APPs of the APP icons.

The user may view the association relationship to know a subordinate hiding relationship between the APP icons, and when forgetting a hiding position of a certain APP icon, views the association relationship to know the hiding position.

Optionally, the user may also execute a dissociate operation on the association relationship to restore and display the hidden APP icon in the desktop interface. Correspondingly, the terminal device displays the first APP icon in the desktop interface when acquiring the dissociate operation corresponding to the association relationship between the first APP icon and the second APP icon.

In such a manner, when the request for viewing the hidden APP is acquired, the identity of the user is checked first, and the hidden APP is displayed to the user after the user passes verification, so that privacy and security of the hidden APP is sufficiently ensured.

In another optional embodiment provided on the basis of the embodiment shown in Fig. 1, as shown in Fig. 5, after Step 102, the method further includes the following steps.

In Step 108, an operation instruction for an APP is acquired from an APP store, the APP being corresponding to the first APP icon.

The first APP icon is a hidden APP icon. The APP store is an APP program to provide an APP, which may be downloaded and installed, for the terminal device. The APP store provides functions of searching, installation, updating and the like for the APP. The operation instruction includes, but is not limited to, any one of a searching instruction, an installation instruction and an updating instruction.

In Step 109, the APP corresponding to the first APP icon is displayed, and a state of the APP corresponding to the first APP icon is marked to be hidden.

Exemplarily, when the user searches the APP store for the APP corresponding to the hidden APP icon, the terminal device marks the state of the APP to be hidden.

In an example, the terminal device forbids the user to trigger the APP corresponding to the hidden APP icon to run in the APP store. In another example, when acquiring a running instruction of the APP corresponding to the first APP icon (for example, the first APP icon is a hidden APP icon) from the APP store, the terminal device displays prompting information, the prompting information is arranged to prompt input of the verification password, the terminal device acquires the input verification password, and in a case where the input verification password is correct, the terminal device runs the APP corresponding to the first APP icon.

Optionally, when acquiring a searching instruction for the APP corresponding to the first APP icon from another searching entry (such as a system global searching entry of the terminal device) except the APP store, the terminal device does not provide the APP corresponding to the first APP icon in a searching result to ensure privacy.

The following is a device embodiment of the present disclosure, and may be used to execute the method embodiment of the present disclosure. Details undisclosed in the device embodiment of the present disclosure refer to the method embodiment of the present disclosure.

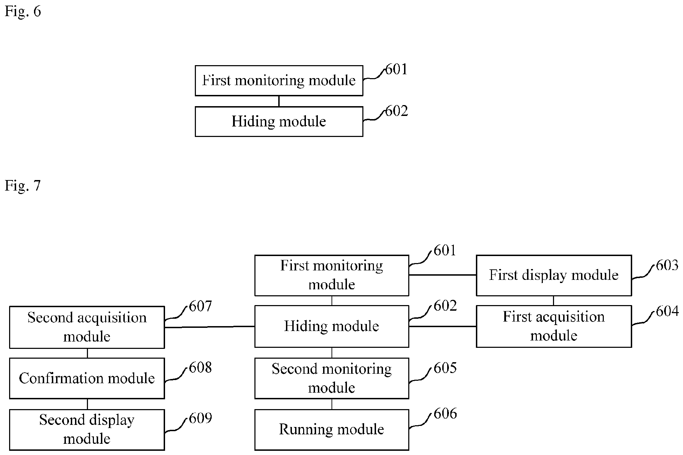

Fig. 6 is a block diagram of a device for hiding an APP icon, according to an exemplary embodiment. The device has a function of implementing the abovementioned method examples, and the function may be realized by hardware, and may also be realized by executing corresponding software by the hardware. The device may include: a first monitoring module 601 and a hiding module 602.

The first monitoring module 601 is configured to monitor, in a desktop interface, a hiding operation on a first APP icon by a second APP icon, the second APP icon being any installed APP icon.

The hiding module 602 is configured to hide the first APP icon in the desktop interface.

From the above, the device provided by the embodiment hides the first APP icon in the desktop interface when the hiding operation on the first APP icon by the second APP icon is detected in the desktop interface, so that the problem of relatively poorer privacy of an APP icon hiding function provided by the related technology is solved; and since another APP icon used for hiding the APP icon may be arbitrarily selected by the user, others cannot easily trigger the hidden APP icon to be displayed due to not knowing a specific hiding position of the hidden APP icon, even though they master the operation for triggering the hidden APP icon to be displayed, and the privacy of the function is improved.

In an optional embodiment provided on the basis of the embodiment shown in Fig. 6, the hiding operation includes: dragging the first APP icon to the second APP icon and then releasing the first APP icon.

Optionally, the hiding operation includes: long-pressing the first APP icon, dragging the first APP icon to the second APP icon and then releasing the first APP icon.

Optionally, as shown in Fig. 7, the device further includes: a first display module 603 and a first acquisition module 604.

The first display module 603 is configured to display multiple options after the first APP icon is dragged to the second APP icon and then the first APP icon is released, the multiple options including a hiding option, and the hiding option being arranged to trigger selection of hiding the first APP icon under the second APP icon.

The first acquisition module 604 is configured to acquire a selection operation of the hiding option to trigger the hiding module 602 to execute the step of hiding the first APP icon in the desktop interface.

In another optional embodiment provided on the basis of the embodiment shown in Fig. 6, as shown in Fig. 7, the device further includes: a second monitoring module 605 and a running module 606.

The second monitoring module 605 is configured to monitor, in the desktop interface, a hidden APP calling operation corresponding to the second APP icon.

The running module 606 is configured to, after the hidden APP calling operation is detected, run an APP corresponding to the APP icon hidden by the second APP icon.

Optionally, the second monitoring module 605 is configured to:
monitor, in the desktop interface, a multi-click operation on the second APP icon; or,
monitor, in the desktop interface, a press operation on the second APP icon; or,
monitor, in the desktop interface, a swipe operation on the second APP icon.

Optionally, the running module 606 is configured to:
when there is one APP icon hidden by the second APP icon, run an APP corresponding to the APP icon hidden by the second APP icon;
   or,
when there are a plurality of APP icons hidden by the second APP icon, display a hidden APP interface in which the APP icons hidden by the second APP icon are included, acquire an operation for selecting a target APP icon in the hidden APP interface, and run an APP corresponding to the target APP icon.

In another optional embodiment provided on the basis of the embodiment shown in Fig. 6, as shown in Fig. 7, the device further includes: a second acquisition module 607, a confirmation module 608 and a second display module 609.

The second acquisition module 607 is configured to receive a request for viewing the hidden APP, and acquire a verification password.

The confirmation module 608 is configured to confirm the received verification password.

The second display module 609 is configured to, in a case where the verification password is correct, display the hidden APP, the hidden APP being displayed in a manner of associating the first APP icon with the second APP icon.

In another optional embodiment provided on the basis of the embodiment shown in Fig. 6, the device further includes: a third acquisition module and a third display module.

The third acquisition module is configured to acquire, from an APP store, an operation instruction for an APP, the APP being corresponding to the first APP icon.

The third display module is configured to display the APP corresponding to the first APP icon, and mark a state of the APP corresponding to the first APP icon to be hidden.

It is noted that: when realizing its functions, the device provided by the embodiment is described only with division of each of the abovementioned function modules as an example, and in a practical application, the abovementioned functions may be allocated to different function modules for realization according to a practical requirement, that is, a content structure of the device is divided into different function modules to realize all or part of the abovementioned functions.

With respect to the devices in the above embodiments, the specific manners for performing operations for individual modules therein have been described in detail in the embodiments regarding the methods, which will not be elaborated herein.

An exemplary embodiment of the present disclosure further provides a device for hiding an APP icon, which may implement a method provided by the present disclosure. The device includes a processor, and a memory configured to store an executable instruction of the processor, wherein the processor is configured to:

monitor, in the desktop interface, a hiding operation on a first APP icon by a second APP icon in a desktop interface, the second APP icon being any installed APP icon; and

hide the first APP icon in the desktop interface.

Optionally, the hiding operation includes: dragging the first APP icon to the second APP icon and then releasing the first APP icon.

Optionally, the hiding operation includes: long-pressing the first APP icon, and dragging the first APP icon to the second APP icon and then releasing the first APP icon.

Optionally, the processor is further configured to:
display multiple options after the first APP icon is dragged to the second APP icon and then the first APP icon is released, the multiple options including a hiding option, and the hiding option being arranged to trigger selection of hiding the first APP icon under the second APP icon; and
acquire an operation of selecting the hiding option to trigger execution of the hiding the first APP icon in the desktop interface.

Optionally, the processor is further configured to:
monitor, in the desktop interface, a hidden APP calling operation corresponding to the second APP icon; and
after the hidden APP calling operation is detected, run an APP corresponding to the APP icon hidden by the second APP icon.

Optionally, the processor is configured to:
monitor, in the desktop interface, a multi-click operation on the second APP icon; or,
monitor, in the desktop interface, a press operation on the second APP icon; or,
monitor, in the desktop interface, a swipe operation on the second APP icon.

Optionally, the processor is configured to:
when there is one APP icon hidden by the second APP icon, run an APP corresponding to the APP icon hidden by the second APP icon;
   or,
when there are a plurality of APP icons hidden by the second APP icon, display a hidden APP interface in which the APP icons hidden by the second APP icon are included, acquire an operation for selecting a target APP icon in the hidden APP interface, and run an APP corresponding to the target APP icon.

Optionally, the processor is further configured to:
receive a request for viewing the hidden APP, and acquire a verification password;
confirm the received verification password; and
in a case where the verification password is correct, display the hidden APP, the hidden APP being displayed in a manner of associating the first APP icon with the second APP icon.

Optionally, the processor is further configured to:
acquire, from an APP store, an operation instruction for an APP, the APP being corresponding to the first APP icon; and
display the APP corresponding to the first APP icon, and mark a state of the APP corresponding to the first APP icon to be hidden.

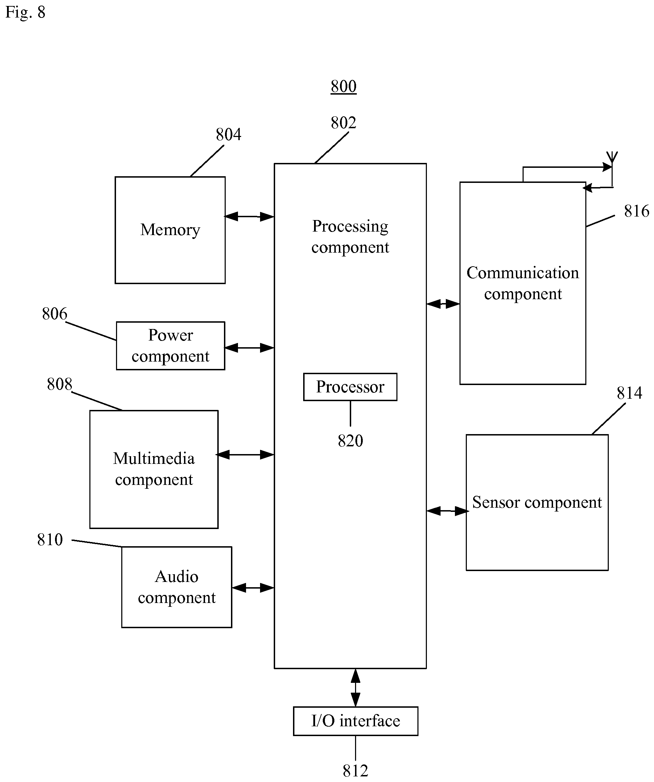

Fig. 8 is a block diagram of a device 800, according to an exemplary embodiment. For example, the device 800 may be a mobile phone, a computer, a digital broadcast terminal, a messaging device, a gaming console, a tablet, a medical device, exercise equipment, a PDA and the like.

Referring to Fig. 8, the device 800 may include one or more of the following components: a processing component 802, a memory 804, a power component 806, a multimedia component 808, an audio component 810, an Input/Output (I/O) interface 812, a sensor component 814, and a communication component 816.

The processing component 802 typically controls overall operations of the device 800, such as the operations associated with display, telephone calls, data communications, camera operations, and recording operations. The processing component 802 may include one or more processors 820 to execute instructions to perform all or part of the steps in the abovementioned method. Moreover, the processing component 802 may include one or more modules which facilitate interaction between the processing component 802 and the other components. For instance, the processing component 802 may include a multimedia module to facilitate interaction between the multimedia component 808 and the processing component 802.

The memory 804 is configured to store various types of data to support the operation of the device 800. Examples of such data include instructions for any application programs or methods operated on the device 800, contact data, phonebook data, messages, pictures, video, etc. The memory 804 may be implemented by any type of volatile or non-volatile memory devices, or a combination thereof, such as a Static Random Access Memory (SRAM), an Electrically Erasable Programmable Read-Only Memory (EEPROM), an Erasable Programmable Read-Only Memory (EPROM), a Programmable Read-Only Memory (PROM), a Read-Only Memory (ROM), a magnetic memory, a flash memory, and a magnetic or optical disk.

The power component 806 provides power for various components of the device 800. The power component 806 may include a power management system, one or more power supplies, and other components associated with the generation, management and distribution of power for the device 800.

The multimedia component 808 includes a screen providing an output interface between the device 800 and a user. In some embodiments, the screen may include a Liquid Crystal Display (LCD) and a Touch Panel (TP). If the screen includes the TP, the screen may be implemented as a touch screen to receive an input signal from the user. The TP includes one or more touch sensors to sense touches, swipes and gestures on the TP. The touch sensors may not only sense a boundary of a touch or swipe action, but also sense a duration and pressure associated with the touch or swipe action. In some embodiments, the multimedia component 808 includes a front camera and/or a rear camera. The front camera and/or the rear camera may receive external multimedia data, when the device 800 is in an operation mode, such as a photographing mode or a video mode. Each of the front camera and the rear camera may be a fixed optical lens system or have focusing and optical zooming capabilities.

The audio component 810 is configured to output and/or input an audio signal. For example, the audio component 810 includes a Microphone (MIC), and the MIC is configured to receive an external audio signal when the device 800 is in the operation mode, such as a call mode, a recording mode and a voice recognition mode. The received audio signal may be further stored in the memory 804 or sent through the communication component 816. In some embodiments, the audio component 810 further includes a speaker for outputing the audio signal.

The I/O interface 812 provides an interface between the processing component 802 and a peripheral interface module, and the peripheral interface module may be a keyboard, a click wheel, a button and the like. The button may include, but is not limited to: a home button, a volume button, a running button and a locking button.

The sensor component 814 includes one or more sensors for providing status assessment in various aspects for the device 800. For instance, the sensor component 814 may detect an on/off status of the device 800 and relative positioning of components such as a display and a keypad of the device 800, and the sensor component 814 may further detect a change in a position of the device 800 or a component of the device 800, presence or absence of contact between the user and the device 800, orientation or acceleration/deceleration of the device 800 and a change in temperature of the device 800. The sensor component 814 may include a proximity sensor configured to detect presence of an object nearby without any physical contact. The sensor component 814 may further include an optical sensor, such as a Complementary Metal Oxide Semiconductor (CMOS) or Charge Coupled Device (CCD) image sensor, configured for use in an imaging application. In some embodiments, the sensor component 814 may further include an acceleration sensor, a gyroscope sensor, a magnetic sensor, a pressure sensor or a temperature sensor.

The communication component 816 is configured to facilitate wired or wireless communication between the device 800 and another device. The device 800 may access a communication-standard-based wireless network, such as a Wireless Fidelity (Wi-Fi) network, a 2nd-Generation (2G) or 3rd-Generation (3G) network, or a combination thereof. In an exemplary embodiment, the communication component 816 receives a broadcast signal or broadcast associated information from an external broadcast management system through a broadcast channel. In an exemplary embodiment, the communication component 816 further includes a Near Field Communication (NFC) module to facilitate short-range communication. For example, the NFC module may be implemented on the basis of a Radio Frequency Identification (RFID) technology, an Infrared Data Association (IrDA) technology, an Ultra-WideBand (UWB) technology, a BlueTooth (BT) technology and another technology.

In an exemplary embodiment, the device 800 may be implemented by one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, micro-controllers, microprocessors or other electronic components, for performance of the abovementioned methods.

In an exemplary embodiment, there is also provided a non-transitory computer-readable storage medium including an instruction, such as the memory 804 including an instruction, and the instruction may be executed by the processor 820 of the device 800 to implement the abovementioned methods. For example, the non-transitory computer-readable storage medium may be a Read-Only Memory (ROM), a Radom Access Memory (RAM), a Compact Disc Read-Only Memory (CD-ROM), a magnetic tape, a floppy disc, an optical data storage device and the like.

According to the non-transitory computer-readable storage medium, when the instruction in the storage medium is executed by the processor of the device 800, the device 800 may execute the abovementioned method.

It should be understood that "multiple" mentioned in the present disclosure refers to two or more than two. "And/or" describes an association relationship between associated objects, and represents that there may exist three relationships. For example, A and/or B may represent three conditions that A exists independently, A and B both exist and B exists independently. Character "/" usually represents that the front and back associated objects are in an "or" relationship.

Other embodiments of the invention will be apparent to those skilled in the art from consideration of the specification and practice of the invention disclosed here. This application is intended to cover any variations, uses, or adaptations of the invention following the general principles thereof and including such departures from the present disclosure as come within known or customary practice in the art. It is intended that the specification and examples be considered as exemplary only, with a true scope of the invention being indicated by the following claims.

It will be appreciated that the present invention is not limited to the exact construction that has been described above and illustrated in the accompanying drawings, and that various modifications and changes can be made without departing from the scope thereof. It is intended that the scope of the invention only be limited by the appended claims.

## Claims

1. A method for hiding an Application (APP) icon, **characterized in that** the method comprises:
monitoring, in a desktop interface, a hiding operation on a first APP icon by a second APP icon (101), the second APP icon being any installed APP icon; and
hiding the first APP icon in the desktop interface (102).

2. The method according to claim 1, wherein the hiding operation comprises:
dragging the first APP icon to the second APP icon; and
then releasing the first APP icon,
or, the hiding operation comprises:
long-pressing the first APP icon;
dragging the first APP icon to the second APP icon; and
then releasing the first APP icon.

3. The method according to claim 2, wherein the method further comprises:
displaying multiple options, after dragging the first APP icon to the second APP icon and then releasing the first APP icon, the multiple options comprising a hiding option, and the hiding option being arranged to trigger selection of hiding the first APP icon under the second APP icon; and
acquiring a selection operation of the hiding option to trigger execution of the hiding the first APP icon in the desktop interface.

4. The method according to any one of claims 1 to 3, wherein the method further comprises:
monitoring, in the desktop interface, a hidden APP calling operation corresponding to the second APP icon (103); and
running an APP corresponding to the APP icon hidden by the second APP icon after the hidden APP calling operation is detected (104).

5. The method according to claim 4, wherein monitoring, in the desktop interface, a hidden APP calling operation corresponding to the second APP icon (103) comprises:
monitoring, in the desktop interface, a multi-click operation on the second APP icon; or
monitoring, in the desktop interface, a press operation on the second APP icon; or
monitoring, in the desktop interface, a swipe operation on the second APP icon.

6. The method according to claim 4, wherein running the APP corresponding to the APP icon hidden by the second APP icon (104) comprises:
in the case that there is one APP icon hidden by the second APP icon, running an APP corresponding to the APP icon hidden by the second APP icon; or
in the case that there are a plurality of APP icons hidden by the second APP icon,
displaying a hidden APP interface in which the APP icons hidden by the second APP icon are included, acquiring an operation of selecting a target APP icon in the hidden APP interface, and running an APP corresponding to the target APP icon.

7. The method according to any one of claims 1 to 6, wherein the method further comprises:
receiving a request for viewing the hidden APP, and acquiring a verification password (105);
confirming the received verification password (106); and
in the case that the verification password is correct, displaying the hidden APP (107), the hidden APP being displayed in a manner of associating the first APP icon with the second APP icon.

8. The method according to any one of claims 1 to 7, wherein the method further comprises:
acquiring, from an APP store, an operation instruction for an APP (108), the APP being corresponding to the first APP icon; and
displaying the APP corresponding to the first APP icon, and marking a state of the APP corresponding to the first APP icon to be hidden (109).

9. A device for hiding an Application (APP) icon, **characterized in that** the device comprises:
a first monitoring module (601) configured to monitor, in a desktop interface, a hiding operation on a first APP icon by a second APP icon, the second APP icon being any installed APP icon; and
a hiding module (602) configured to hide the first APP icon in the desktop interface.

10. The device according to claim 9, wherein the hiding operation comprises:
dragging the first APP icon to the second APP icon; and
then releasing the first APP icon,
or,
the hiding operation comprises:
long-pressing the first APP icon;
dragging the first APP icon to the second APP icon; and
then releasing the first APP icon.

11. The device according to claim 10, wherein the device further comprises:
a first display module (603) configured to display multiple options after dragging the first APP icon to the second APP icon and then releasing the first APP icon, the multiple options comprising a hiding option, and the hiding option being arranged to trigger selection of hiding the first APP icon under the second APP icon; and
a first acquisition module (604) configured to acquire a selection operation of the hiding option to trigger execution of the hiding the first APP icon in the desktop interface by the hiding module (602).

12. The device according to any one of claims 9 to 11, wherein the device further comprises:
a second monitoring module (605) configured to monitor, in the desktop interface, a hidden APP calling operation corresponding to the second APP icon; and
a running module (606) configured to run an APP corresponding to the APP icon hidden by the second APP icon, after the hidden APP calling operation is detected.

13. The device according to claim 12, wherein the running module is configured to:
in the case that there is one APP icon hidden by the second APP icon, running an APP corresponding to the APP icon hidden by the second APP icon;
or
in the case that there are a plurality of APP icons hidden by the second APP icon,
display a hidden APP interface in which the APP icons hidden by the second APP icon are included, acquire an operation of selecting a target APP icon in the hidden APP interface, and run an APP corresponding to the target APP icon.

14. The device according to any one of claims 9 to 13, wherein the device further comprises:
a second acquisition module configured to receive a request for viewing the hidden APP, and acquire a verification password;
a confirmation module configured to confirm the received verification password; and
a second display module configured to display the hidden APP in the case that the verification password is correct, the hidden APP being displayed in a manner of associating the first APP icon with the second APP icon.

15. The device according to any one of claims 9 to 4, wherein the device further comprises:
a third acquisition module configured to acquire, from an APP store, an operation instruction for the APP, the APP being corresponding to the first APP icon; and
a third display module configured to display the APP corresponding to the first APP icon, and mark a state of the APP corresponding to the first APP icon to be hidden.
